Europäisches Patentamt

(19) European Patent Office

Office européen des brevets

(11) Publication number: **0 131 635**
A1

## (12) EUROPEAN PATENT APPLICATION

(21) Application number: 83106611.3

(22) Date of filing: 06.07.83

(51) Int. Cl.⁴: **H 05 B 33/12**
H 05 B 33/20, H 05 B 33/08

(43) Date of publication of application:
23.01.85 Bulletin 85/4

(84) Designated Contracting States:
BE DE FR GB IT LU NL

(71) Applicant: Timex Corporation
P.O. Box 2126
Waterbury, Connecticut 06720(US)

(72) Inventor: D'Onofrio, Anthony
10 Overhill Road
West Hartford Connecticut 06117(US)

(72) Inventor: Kitik, Walter
838 Spindle Hill Road
Wolcott Connecticut 06716(US)

(74) Representative: Hoeger, Stellrecht & Partner
Uhlandstrasse 14c
D-7000 Stuttgart 1(DE)

(54) Electroluminescent lighting system having a phosphor/epoxy mixture for a high frequency electroluminescent lamp.

(57) An electroluminescent (EL) lighting system (10, 12) is disclosed including a lamp (12) which has a low dielectric constant binder, phosphor-embedded matrix (33) sandwiched between two conductive electrodes (31, 35) and which is pulsed at a high frequency by a low voltage battery-powered driving circuit (10). The lamp exhibits characteristics such as long half-life, improved maintenance, high light emission of uniform intensity, high figure of merit, minimal internal heating, no impedance matching to drive circuit and no critical point of attachment of drive circuit to lamp since lamp has low electrical loss factor. The lamp does not permanently fail when punctured or when dielectric strength is exceeded. At least one of the conductive electrodes (31, 35) is light transmitting. The matrix (33) is non-hygroscopic and the phosphor is encapsulated.

FIG. 6

Electroluminescent Lighting System Having a Phosphor/Epoxy Mixture For a High Frequency Electroluminescent Lamp

This invention relates to an improved electroluminescent (EL) cell, panel or lamp and drive circuit which together form an EL lighting system.

The direct conversion of electrical energy into light of various intensities and colors by means of impact excitation and radiative recombination of electron and hole currents in semiconducting, luminescent crystals are known in the art. It is known that II-VI compounds of the zinc and cadmium chalcogenides possess excellent luminescent properties and have bandgaps which range throughout the visible spectrum into the near ultraviolet (UV), producing high-efficiency luminescence under UV and electron-beam excitation. These materials can also be produced in the form of mixed crystal (alloy) combinations such as ZnSe-ZnS and ZnS-CdS in varying proportions to achieve a continuous luminescence spectrum in the visible range. Furthermore, since these are direct bandgap materials, an efficient radiactive recombination can be achieved in band-to-band transitions.

Since an efficient luminescent transmission is required for obtaining efficient light emission from injection electroluminescent cells, the mechanism for this transition must be consistent with that for current transport. Mechanisms for luminescent transmission in II-VI compounds generally fall into three categories: exciton transitions, edge and pair emission and broad-band luminescence, each of which are discussed in the literature.

Broad-band luminescence observed in ZnS and other II-VI compounds results from the doping of acceptor-type group IB elements (Cu,Ag,Au) as well as donor-type group IIIA (B, Al, Ga, In, Tl) or group VIIA (F, Cl, Br, I) elements. These elements are associated with rather deep centers and produce various types of broad-band luminescence. However, the details of the electronic transition and the nature of the center in Cu-blue luminescence is not clearly understood. See "Electroluminescence", Topics in Applied Physics, vol. 17, 1977 edited by J.I. Pankove; Fischer, "Electroluminescence in II-VI Compounds", Research report, RCA Laboratories, Princeton, New Jersey, 1965; Thornton, "Electroluminescence at Low Voltages", Physical Review, November 15, 1969; Fleming, "Electroluminescent Phosphors of Improved Life and Color", SAE Presentation, April 7, 1971; and Doi et al., "Bright dc electroluminescence in ZnSe-ZnS: Mn thin films", J. Appl. Phys. 51 (8), August '80 which are incorporated herein by reference.

Generally, an electroluminescent cell or lamp or panel includes a transparent front-electrode such as plastic or glass, coated first with a thin conducting film, then with a thin binder layer of transparent thermoplastic material of a high dielectric constant which is loaded with an electroluminescent phosphor powder forming a matrix, and finally with a reflecting back-electrode made of electrically conducting material such as metal or metalized plastic. Light is emitted through the front electrode when an alternating current electric field is applied across the phosphor powder. The electric field excites the phosphor to luminesce. The thermoplastic material or binder binds the phosphor in place and permits laminating the various component layers of the cell together.

Even though electroluminescence was discovered over forty years ago, the practical development of the phenomenon did not occur until the dispersion type EL panel and the $SnO_2$ transparent conductive film was fabricated some years later. Although research had been conducted on dispersion type EL cells, problems involving brightness, efficiency, and adequate life time appeared to be insurmountable. Recent developments of the dispersion type DC-EL cell, the Lumocen cell and the double insulating layer structure, in which a vacuum-deposited thin phosphor film replaces the dispersion layer, resolved some of the problems of short life and low brightness. The thin film, double insulating layer structure really consists of a triple layer, namely, an active phosphor layer sandwiched between two insulating layers. Because of this sandwich structure, undesirable leakage current flowing through the device is prevented. Consequently, as explained in several patents which are discussed later, the device can sustain a sufficiently high electric field across the active layer without breakdown. The transparent electrode is typically made of $SnO_2$ or $In_2O_3$ using the conventional thermal decomposition-oxidation and vacuum evaporation method on a clean glass substrate. The insulating layer is typically of high dielectric strength and high dielectric constant material. Insulating materials such as $Y_2O_3$, $Si_3N_4$ and $Al_2O_3$ are usually satisfactory. The active layer may consist of high purity ZnS doped with Mn, Cl or Cu. The rear electrode is usually formed by the vacuum evaporated Al film. The cell may be encapsulated by an $Si_3N_4$ humidity protection layer.

As disclosed in U.S. Patent 3,238,407 issued to Jaffe, the higher the dielectric constant of the binder relative to the phosphor the more the electric field will be concentrated across the phosphor crystals, and the greater will be the amount of light produced for the same applied voltage, phosphor and cell construction. However, the high dielectric constant material used as the binder for the phosphor exhibits a high electrical loss factor ($I^2R$) which limits the frequency with which the cell can be driven without overheating it. The current drawn by an electroluminescent lamp having a high loss, high dielectric constant binder rises proportionately with frequency to cause internal heating of the cell. As a result, heating of the cell will become a problem at frequencies of about 2000 Hz and higher. Operating an EL cell at more than 2000 Hz is acoustically undesirable and driving EL cells at frequencies above 2000 Hz becomes difficult when using large-area lamps because of the high cell capacitance. Furthermore, at high frequencies of about 6000 Hz and higher, it is sometimes difficult to achieve uniform voltage distribution over a large-area lamp which uses a high dielectric constant binder. See Storck and Greenberg, "Electroluminescence", IEEE Spectrum, 1964 which is incorporated herein by reference.

As the electrodes or conductive plates of the cell increase in size, electrical conductivity required in the conducting plates increases. As a result, strip electrodes or conductors are provided along the edges of larger cells to enhance the uniform development of the electrical field in the cell. However, the cell is brightest or has highest emission intensity at the edges near the strip electrodes and decreases in brightness or emission intensity near the center of the cell. Furthermore, as the electrodes increase in size, the cell, as a load, has to be impedance matched to its driving circuit.

As disclosed in U.S. Patents 3,346,757 issued to Dierssen and 3,238,407 issued to Jaffe, in order to obtain an electroluminescent cell that has greater energy efficiency and is less susceptible to arcing due to breakdown of the strength of the dielectric, the cells are provided with a thin barrier layer of a dielectric or insulating material between the phosphor bearing layer and one of the electrically conductive electrode layers, particularly the back-electrode layer. For this purpose, a barrier layer material of improved permittivity and high dielectric strength, as compared with the phosphor layer, is used to allow a greater voltage to be applied to the cell to increase its electroluminescence without producing dielectric breakdown and arcing. Furthermore, where the insulating layer employed is of light reflecting character, good reflection, by the insulating material, of the light produced by the phosphor provides greater lamp brightness at the light transmitting conducting surface of the cell. However, it is known that the frequency of the exciting voltage has a more profound effect on the intensity of light emission from an EL lamp than does voltage. It has been shown that light output from phosphors is composed of individual pulses of light generated at each voltage pulse such that light emission intensity is proportional to the voltage-pulse frequency.

Electroluminescent cells are only as strong as the weakest point in the high dielectric binder that binds the phosphor between the electrodes. If the cell is overdriven by applying a voltage that exceeds the dielectric strength of the binder, breakdown occurs and the cell no longer emits light. At breakdown, the molecules of the dielectric material allow arcing to occur between the binder and the cell electrodes.

A typical cell is provided with wire type outer leads or terminals for connecting the cell at critically predetermined points to an electrical driving circuit. These points of connection are selected so as to minimize the electrical loss factor and to prevent build-up of heat in the cell. The terminal construction must be moisture resistant in order to prevent moisture penetration into the cell, afford adequate electrical shock protection, be free from electrical loss and capable of withstanding vibrations and physical shocks normally encountered in service without loosening and breaking the circuit between the cell and its driver which would render the cell inoperative. As disclosed in U.S. Patent 3,480,088 issued to Beswick et al., to satisfy all of these criteria with a wire terminal construction is a particularly difficult task. Simple mechanical pressure contact by crimping or staking is not adequate since these techniques stress conductively coated plastic electrodes, and the terminals can easily become disconnected from the electrodes thereby preventing operation of the lamp. Using a conductive silver print film may help to avoid this problem, but for large lamps, having dimensions of approximately eight inches by eleven inches, the lamp will appear to be brighter closer to the conductive edges of the conductive film and darker near the center. Arbitrarily positioning electrical contacts on a lamp can produce non-uniform light emission intensity and, may, from a practical point of view, limit the size of lamps.

The electroluminescence of phosphors embedded in an insulating medium and excited by an alternating electric field usually deteriorates with a rate which is nearly inversely proportional to the frequency of the exciting field according to W. Lehmann in an article entitled "Hyper-Maintenance of Electroluminescence", Journal of the Electrochemical Society, January, 1966, and which is incorporated herein by reference. It is customary in the art to characterize the maintenance behavior of a phosphor by the number of cycles of continued application of the exciting field required to deteriorate the emission intensity to 50% of its original value. This half life is on the order of $10^7$ to $10^8$ cycles of continued operation. P.M. Jaffe, as reported by Lehmann, improved this half life to within the range of from $10^9$ to $10^{10}$ cycles.

It is known that typical ZnS-type DC-EL phosphor lamps exhibit such properties as high efficiency, high contrast, high discrimination ratio, and an acceptable operating life time. Basic fabrication technology result in inexpensive rugged lamps which may be constructed in a variety of configurations and sizes. Typical DC-excited cells fabricated from ZnS: Mn, Cu powders have an emission peak of 5800 Angstroms. These lamps operate typically at 100 volts with a maximum current density of up to 5 $ma/cm^2$. Brightness of 30 to 100 foot-Lamberts (fL) and power efficiency of from 0.1 to 0.3 percent have been obtained. These phosphors can be operated at a half-brightness lifetime of greater than 500 hours. For additional characteristics see Vecht, "D.C. Electroluminescence in Zinc Sulphide and Related Compounds", J. of Luminescence, 7, pp. 213-227, (1973) which is incorporated herein by reference.

Typical uses for lamps are disclosed in Smith, "DC electroluminescent panels get green light for auto displays", Electronics International, September 27, 1979. Phosphor display panels are used in a variety of commercial applications including digital clocks, meter displays, instrument panels, and TV displays, the application being determined by the light-output capability and size of the particular panel. Phosphor display panels may produce light emission at a variety of wavelengths. However, in the deep green (wavelength less than or equal to 5400 Angstroms (A)) to blue spectral region, efficient injection-luminescent cells have not been attained. Luminescence in this spectral region require materials having wider band gaps such as ZnSe and ZnS from II-VI compounds. These compounds would provide blue emission. Injection luminescence with a brightness of greater than $10^4$ foot-Lamberts (fL) is feasible in the blue spectral region (about 4400 Å) with approximately 2.8 volts bias at 1 a/cm$^2$ if an efficient carrier injection is provided. Methods of injection electroluminescence describing the mechanism of carrier injection is documented in the literature.

The following patents represent some of the prior art pertinent to the field of electroluminescent devices: U.S. Pat. nos. 3,330,983 issued July 11, 1967 to Cusano et al.; 3,148,299 issued September 8, 1964 to Deval et al.; 3,177,391 issued April 6, 1965 to Deval et al.; 3,252,845 issued May 24, 1966 to Schindler et al.; 3,047,052 issued July 31, 1962 to Fridrich; 3,295,002 issued Dec. 27, 1966 to Lyndhurst; and 3,281,619 issued March 27, 1963 to Greene.

These patents are mentioned as being representative of the prior art and other pertinent patents may exist. For example, U.S. patent 4,238,793 issued December 9, 1980 to Hochstrate and assigned to the Timex Corporation discloses a driving circuit for exciting phosphors in EL lamps to luminescence by providing a low duty cycle pulsed high frequency potential. The duty cycle is less than 25 percent. Also, U.S. Patent 4,253,097 issued February 24, 1981 to Hochstrate and assigned to the Timex Corporation discloses a drive circuit for reducing power consumption to activate electroluminescent panels. Both Patents 4,238,793 and 4,253,097 are incorporated herein by reference. The article by Vecht, which was previously referenced, alluded to the practical value of ZnS panels if operated under pulsed conditions, but in a dot matrix array.

Accordingly, it is an object of the invention to drive electroluminescent cells having a low dielectric constant phosphor binder at high frequencies above 2000 Hz without overheating the cells.

It is an object of this invention to provide an EL cell that can be driven at low voltage and at high frequency to provide light emission intensities approaching 700 foot-Lamberts without dielectric breakdown or destruction of the cell, but that will operate commercially substantially between 50 and 100 fL.

Another object of the invention is to provide large-area EL cells without additional strip electrodes along the edge of each cell for enhancing the applied electric field.

Another object of the invention is to provide a cell without an additional high dielectric protective barrier layer that protects against dielectric breakdown when the dielectric strength is exceeded.

It is an object of this invention to be able to physically penetrate the cell without substantially affecting the light emitting performance of the remainder of the cell.

A further object of the invention is to provide an electroluminescent cell that produces high emission intensity when pulse-driven at low voltage and high frequency and exhibits an improved maintenance behavior of the phosphor.

An additional object of the invention is to provide an EL cell that produces a substantially high emission intensity when pulse-driven at relatively low voltage and high frequency wihout an additional reflective barrier layer.

Another object of the invention is to provide a cell of substantially any size that produces light of substantially uniform brightness regardless of the position of attachment of the leads to the cell from the driving circuit.

Another object of the invention is to facilitate attachment of driving circuit leads to cells without the need to predetermine critical points of attachment.

## Drawings

Other objects and advantages of this invention may be more clearly seen when viewed in conjunction with the accompanying drawings. Similar reference numerals refer to similar parts throughout.

FIG.1 is a block diagram of the electroluminescent lamp equivalent circuit connected to the lamp drive circuit in accordance with the present invention;

FIGS 2-5 show the waveforms of the drive circuit of FIG. 1; and

FIG. 6 shows the laminated layers of the EL lamp, which is represented by an equivalent circuit in FIG. 1, connected to the drive circuit of FIG. 1.

## Summary of the Invention

In an electroluminescent lighting system having a drive circuit including a low-voltage battery-supplied power source for alternately applying an electric field between at least two electrically conductive electrodes, a high maintenance electroluminescent lamp pulse-driven by said drive circuit comprising a dielectric binder having a dielectric constant substantially ranging from 1 to 5                , and providing an electroluminescent layer disposed between said electrodes to which is alternately applied said electric field at a frequency substantially in the range of from 5 kHZ to 20 kHz for illuminating the electroluminescent layer.

## Description of the Preferred Embodiment

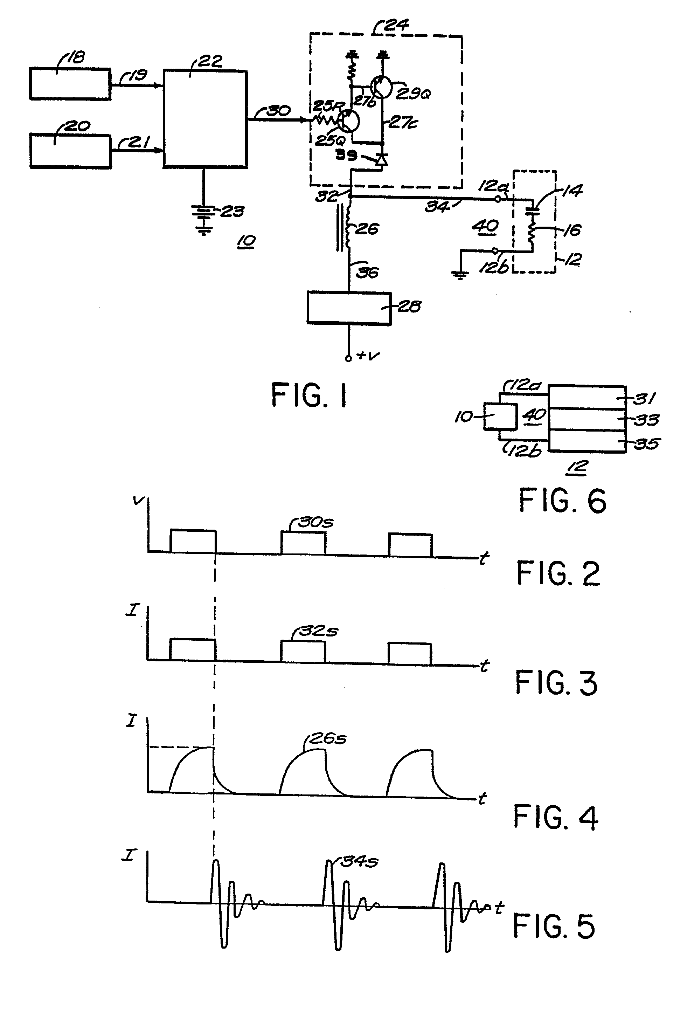

Referring now to electroluminescent (EL) cell drive circuit 10 of FIG. 1 in which either a thin film or thick film EL cell, panel or lamp 12 is illustrated in equivalent circuit form including capacitor 14 and resistor 16 electrically connected to circuit 10 at terminals 12a and 12b. Drive circuit 10 and lamp 12 together form an electroluminescent lighting system. Lamp 12 is shown in laminated layer form in FIG. 6 including light transmitting conductive electrode 31, phosphor/dielectric matrix 33, and conductive back electrode 35 which may also be light transmitting. Both electrodes may be made of either plastic or glass or one electrode may be made of metalized plastic or metal while the other is light transmitting.

In accordance with the invention, the dielectric matrix includes at least one binder material that has a low dielectric constant substantially within the range of from 1 to 5.                    Low dielectric constant material is essential in this embodiment since low dielectric constant material generally have low electrical loss factors and can be driven at relatively high frequencies without excessive heating. The dielectric strength of the binder material may be as high as 550 volts per mil. The phosphor embedded in the binder is encapsulated by polycarbonate or polyethylene encapsulants to a thickness of approximately one micron. A lamp exhibiting these general characteristics has a higher figure of merit. The impedance of the lamp is high such that no additional circuit elements are required to match the impedance of the lamp to drive circuit 10. At least one conductive electrode may be divided up into individual, noncontiguous electrodes which may be driven in a multiplexed manner as described in U.S. Patent 4,238,793 issued to Hochstrate on December 7, 1980 and which is incorporated herein by reference.

Drive circuit 10 includes frequency control means 18, reset means 20, oscillator 22, switch 24, inductor 26, and voltage reference means 28. Drive circuit 10 periodically provides an alternating electric field between the plates of equivalent capacitor 14 or, in FIG. 6, between electrodes 31 and 35.

As is well-known in the art, oscillator 22 may be an astable multivibrator which can independently oscillate from one state to another at a predetermined frequency. Oscillator 22 may be powered by a low voltage DC battery power supply 23 with voltage as low as 1.5 volts. The battery supply and the oscillator together provide the driving frequency for circuit 10. The operating frequency of the oscillator can be adjusted by frequency control means 18 along line 19. The oscillator or multivibrator can also be driven from one state to another by an input pulse provided along line 21 by reset means 20 after which the multivibrator can begin to oscillate freely again. The output of the multivibrator is a sequence of pulsed waveforms 30s, as shown in FIG. 2, provided along line 30 to switch 24. The multivibrator provides low duty cycle pulses of less than 25 percent at a predetermined high frequency to switch 24 for controlling the current flow into inductor 26. Switch 24, which may be a Darlington type amplifier, is "turned on" for the duration of each of the pulse waveforms 30s produced by multivibrator 22. A Darlington type amplifier typically includes a first stage transistor, i.e., NPN, which drives the base of a second stage transistor, i.e. NPN.

In this embodiment, switch 24 is a well-known unity gain buffer amplifier. The switch is "turned on" when a current is provided to the base of the first transistor 25Q for the duration of each of the pulsed waveforms transmitted from the multivibrator to the switch along line 30. Each pulsed waveform is applied across resistor 25R to permit a current to flow to the base of the first transistor for producing a current from the emitter of the first transistor along line 27b to the base of second transistor 29Q. The base current on line 27b "turns on" the second transistor which produces a collector current on line 27c. Diode 39 prevents leakage current from occurring during the build-up of energy in the field around inductor 26 which is discussed later. The switch "turns on" inductor 26 for the duration of each pulse of the output waveforms 32s produced by the switch and provided along line 32. Waveforms 32, shown in FIG. 3, are substantially in phase with waveforms 30s. When inductor 26 is "on", current is drawn from voltage reference means 28 along line 36. The current drawn by the inductor is substantially as shown by waveforms 26s in FIG. 4. Voltage reference means 28 provides a reference voltage on line 36 for alternately producing the energy in the field of inductor 26 as the inductor is turned on and off by switch 24. Energy builds up in the magnetic field around the inductor as the current increases to its maximum value as shown in FIG. 4.

The energy in the magnetic field about the inductor increases at a rate which is proportional to the rate of change, with respect to time, of current drawn by the inductor which is a function of the inductance. As the current drawn by the inductor approaches its maximum value, a back emf (electromotive force) is produced across the inductor which opposes the changing current in the inductor. The current reaches its maximum value in the inductor, as shown in FIG. 4, when the output pulse of switch 24, which "turned on" the inductor, ends, as shown in FIG. 3. The energy that was built up in the field of the inductor is now applied across the plates of EL equivalent circuit capacitor 14 or, more specifically, across lamp electrodes 31 and 35 of FIG. 6. Capacitor 14 will charge due to the energy provided along line 34 by inductor 26 to a specific voltage level until the energy is substantially dissipated in the field of the inductor. The capacitor then discharges through the inductor thereby building up a magnetic field around the inductor again. When the capacitor is substantially discharged, the field around the inductor collapses again and, in so doing, provides a current along line 34 for the purpose of recharging capacitor 14.

The interchange of energy between inductor 26 and capacitor 14 or, more specifically, between inductor 26 and cell 12 is similar to and descriptive of the action of a parallel inductance and capacitance circuit or tank circuit 40 at resonant frequency. The frequency of energy interchange will depend, at least in part, upon the amount of energy developed in the field of inductor 26 and upon the size of cell 12 electrically connected in parallel with the inductor. Substantially any size cell can be driven to luminescence using drive circuit 10 and the same size inductor 26. However, the frequency of energy interchange will change each time a different size cell is connected across the same inductor. The frequency of energy interchange, overall, is a function of both the inductance of inductor 26 and the capacitance of cell 12.

Specifically, if voltage reference 28 provides 12 volts, 600 volts RMS can be obtained across cell 12 when the energy in the magnetic field of 200mH inductor 26 collapses. The voltage across cell 12 may be as high as 2100 volts RMS.

The interchange of energy, and the circulating current that it produces, would continue indefinitely to produce a series of sine waves if the tank circuit or "resonant circuit" 40 had no resistance. However, since some resistance is always present in a tank circuit, the circulating current gradually diminishes as the resistance dissipates the energy in the circuit in the form of heat and light. As shown in FIG. 5, the diminishing sine wave current signals 34s, illustrating the interchange of energy between the inductor and the cell, damp out over time before switch 24 "turns on" inductor 26 to draw current again.

Since cell 12 includes a phosphor embedded in a low dielectric constant material having, generally, a low electrical loss factor, the cell can be driven to a high level of brightness or high emission intensity at high frequencies, produced by oscillator 22, using a low DC voltage oscillator power supply. Lamp 12 can be driven at a frequency of between 5kHz and 20kHz with reference voltages of as low as 12 volts and produce a light intensity of as hight as 700 foot-Lamberts although the typical commercial operating voltage will be substantially between 50 and 100 foot-Lamberts.

Frequency control 18 provides for adjustments to be made to the duty cycle and to the width of the pulses generated by multivibrator 22 along line 30. Controlling the width of pulse waveforms 30s sets the maximum current drawn by inductor 26 for building up the energy in its magnetic field and, subsequently, the magnitude of the electric field produced in cell 12. Reset means 20 is provided to drive multivibrator 22 from one state to another after which the multivibrator can begin to oscillate freely again. Multivibrator 22 provides output waveforms 30s to switch 24. Switch 24 produces pulsed waveforms 32s along line 32 substantially during the duration of each of the pulsed waveforms provided to switch 24 from multivibrator 22. Switch 24 controls the flow of current in inductor 26 and therefore the build-up of energy in its magnetic field. As the current approaches its maximum value over time in the inductor, the inductor produces a back emf which opposes the increase in current. When the current reaches its maximum value and switch 24 shuts off, as shown in FIG. 3, the field around inductor 26 begins to collapse producing a current that charges equivalent capacitor 14 of cell 12 which provides a voltage that produces an electric field between the plates of the capacitor or, more specifically, between lamp electrodes 31 and 35. The applied electric field, produced by the voltage momentarily applied across electrodes 31 and 35, as a function of the frequency of oscillation of multivibrator 22, excites the phosphor embedded in the low dielectric constant material 33 to luminesce. Tank circuit 40 formed by inductor 26 and cell 12 produces self-oscillations due to the interchange of energy between inductor 26 and capacitively-coupled electrodes 31 and 35. The circulating current in the tank circuit gradually diminishes as the resistance dissipates the energy in the tank circuit thereby providing damped oscillations as shown in FIG. 5.

The EL cell will determine how tank circuit 40 will "ring" or oscillate based on the low dielectric constant binder material used to hold the phosphor between conductive electrodes 31 and 35 of FIG. 6. Tank circuit 40 is formed by direct parallel electrical connection of lamp 12 to inductor 26 of drive circuit 10. Inductor 26 is supplied by low (12 volts) reference voltage battery power supply 28 and yet the lamp produces a high light emission intensity as high as 700 foot-Lamberts due substantially to

0131635

the low duty cycle pulsed high frequency driving potential which frequency is substantially in the range of from 5kHz to 20kHz. The current density thru the EL junction formed by the spacing of electrodes 31 and 35 is capable of emitting photons of 2.5eV. The low dielectric constant binder material allows the cell to be driven at such high frequencies. The light emission intensity can be maintained without overheating the lamp and inducing lamp breakdown. Since the lamp is driven at a low duty cycle pulsed high frequency potential, the lamp maintenance has been improved to substantially the range of from $10^{10}$ to $3 \times 10^{10}$ cycles. Lamp maintenance is a characteristic of the behavior of the phosphor and is generally defined as the number of cycles required to deteriorate the emission intensity of the phosphor to 50% of its original value, i.e., its half-life. For a ZnS:Cu, Cl phosphor, this half life has been reported to be $10^8$ to $10^9$ cycles. In accordance with this invention, the half life of the ZnS:Cu, Cl compound used in cell 12 has been increased since the cell can be driven at low duty cycle pulsed high frequencies. As a result, the energy efficiency of the cell is improved and the life of the cell is extended.

The tank circuit may be optimally tuned so that the size of the EL cell attached to driving circuit 10 does not have to be restricted to a narrow range of sizes and dimensions. Since the impedance of the cell is high, a voltage converter or transformer is unnecessary in battery-operated driving circuit 10 for matching cell impedance with the impedance of the driving circuit.

As shown in FIG. 6, cell 12 includes phosphor/dielectric matrix 33 sandwiched between two conductive electrodes, 31 and 35, at least one of which is a light transmitting conductive electrode. Under certain

0131635

applications, both electrodes may be light transparent, each made of, for example, metallized plastic. The light transmitting electrode may include Indium tin oxide coated on a five-mil thick, optical-grade polyester substrate exhibiting a transmissivity exceeding eighty percent. Both electrodes, 31 and 35, are connected to drive circuit 10 by terminals 12a and 12b, respectively. Substantially all electrical connections are made of conductive rubber. Drive circuit 10 produces a voltage across both capacitively-coupled electrodes and induces an electric field across phosphor-dielectric matrix 33. The electric field excites the phosphors to luminesce either by impact excitation or radiative recombination of electrons and holes which is known in the art. Light is emitted and can be substantially any color depending on the phosphor used, type of doping agents added to the phosphor, the frequency of excitation and/or color filters. The phosphor is embedded in a low dielectric binder which may be a two-part epoxy or a one-part epoxy such as LOCTITE 75 without its green dye which reduces the level of illumination. At least one electrode may have a metalized plastic coating applied to it on one surface with an adhesive that allows the electrode to adhere to the phosphor/dielectric matrix. Imperfections in the dielectric layer do not substantially reduce the performance of the cell. The cell will continue to emit light of high intensity even if the dielectric matrix is punched through or if a portion of the cell is penetrated. Cells have capacitance measured in picofarads although the capacitance values change as a function of the size of the cell. However, regardless of the size of the cell, drive circuit 10 can excite the phosphor in each cell to luminesce even though it is powered by a low voltage battery power supply as low as 1.5 volts. Since the binder material in cell 12 has a low dielectric constant, the figure of merit, or Q, of the capacitively-coupled cell is high thereby allowing the cell to be driven at a high frequency substantially within the range of from 5kHz to 20 kHz without overheating. As a result of being driven at a low duty cycle pulsed high frequency potential, the lamp maintenance behavior is increased to substantially within the range of from $10^9$ to $3X10^{10}$ cycles. The cell has a longer life and an emission intensity as high as 700 foot-Lamberts although, under typical operating conditions, the intensity will be about 100 foot-Lamberts. The impedance of cell 12 is high such that it does not have to be impedance matched to drive circuit 10 by additional impedance matching electrical components when the cell is connected directly in parallel to inductor 26 forming the tank circuit configuration. Cell 12 is the capacitive member of tank circuit 40 and is not merely attached to an independently formed tank circuit or resonant circuit. Since the cell is connected to the drive circuit as shown in FIG. 1, terminals 12a and 12b can be inadvertently shorted without damaging circuit 10.

The electric field in virtually all sizes of cells between electrodes 31 and 32 is substantially uniform when the cell is driven at a pulsed high frequency thereby eliminating the need for strip electrodes or conductors along the edges of large-area cells.

The self-oscillations, due to the interchange of energy between the inductor and the capacitively-coupled electrodes in the cell, are sustained by hysteresis but damp out as a result of the internal resistance in tank circuit 40. The cell life is extended since the electric field is not continuously maintained in the space between electrodes 31 and 35 of cell 12. The inductor-cell circuit 40 is pulsed under the control of switch 24 at sufficiently high frequency so as to create the visual impression that the phosphor in phosphor-dielectric matrix 33 is emitting light continuously. The concept of driving a cell with a low duty cycle pulsed high frequency potential was disclosed in U.S. Patent 4,238,793, issued to Hochstrate and assigned to the Timex Corporation.

Circuit 10 of FIG. 1 is shown connected to cell 12 at terminals 12a and 12b. The connections are made through a conductive rubber. More importantly, the determination of the point of contact between terminals 12a and 12b and electrodes 31 and 35 respectively is not a critical requirement. Lamp 12 will luminesce uniformly regardless of the point of contact between the terminals and the electrodes.

While there has been described herein what is considered to be the preferred embodiments of the invention, other modifications may occur to those skilled in the art, and it is intended that the appended claims are to cover all such modifications which fall within the true spirit and scope of the invention as defined by the appended claims.

What is Claimed is:

1.    In an electroluminescent lighting system (10, 12) having a drive circuit (10) including a low voltage battery-supplied power source (23) for alternately applying an electric field between at least two electrically conductive electrodes (31, 35), an improved high maintenance electroluminescent lamp (12) pulse-driven by said drive circuit characterized by:

a.    a dielectric matrix (33) having a dielectric constant substantially within the range of from 1 to 5,

b.    an phosphor dispersed in said dielectric matrix (33) producing an electroluminescent layer disposed between said electrodes, and

c.    switching means (22, 24) for applying said electric field at a frequency substantially in the range of from kHz to 20 kHz for illuminating said electroluminescent layer.

2.    The electroluminescent lighting system (10, 12) of claim 1 in which at least one of said electrically conductive electrodes (31, 35) is light transmitting.

3.    The electroluminescent lighting system (10, 12) of claim 1 in which at least one of said light transmitting electrodes is metal.

4.    The electroluminescent lighting system of claim 1 in which at least one of said electrodes (31, 35) is metalized plastic.

5.    The electroluminescent lighting system (10, 12) of claim 1 in which said electroluminescent layer includes phosphor and dielectric binder

0131635

substantially in the proportion 4:1.


6.   The electroluminescent lighting system (10, 12) of claim 1 in which the thickness of said electroluminescent layer disposed between said electrodes (31, 35) is substantially 2 mil.


7.   The electroluminescent lighting system (10, 12) of claim 5 in which the dielectric binder is a non-hygroscopic epoxy providing protection against moisture in conjunction with said          phosphor.

0131635

FIG. 1

FIG. 6

FIG. 2

FIG. 3

FIG. 4

FIG. 5

# 0131635

## EUROPEAN SEARCH REPORT

Application number

EP 83 10 6611

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y,D | FR-A-2 452 849 (TIMEX) * claims 1-8 * | 1,2 | H 05 B 33/12 H 05 B 33/20 H 05 B 33/08 |
| Y | FR-A-2 120 927 (INTERNATIONAL SCANNING) * page 2, lines 1-5; page 3, lines 1-11; page 6, lines 16-28; claims 1-8 * | 1,2 | |
| A | | 7 | |
| A | FR-A-2 362 552 (BROWN BOVERI) * claims 1-19 * | 1 | |
| A | FR-A-2 066 193 (MATSUSHITA) * claims 1-15 * | 1 | TECHNICAL FIELDS SEARCHED (Int. Cl. 3) |
| | | | H 05 B 33/00 |

The present search report has been drawn up for all claims

| Place of search THE HAGUE | Date of completion of the search 21-02-1984 | Examiner DROUOT M.C. |
|---|---|---|